# EUROPEAN PATENT APPLICATION

(11) **EP 0 854 113 A1**
(43) Date of publication of application: **22.07.1998**
(21) Application number: 96932838.4
(22) Date of filing: 07.10.1996
(51) Int. Cl.: C01B 33/18, C03B 20/00

(54) **SYNTHETIC SILICA GLASS POWDER, PROCESS FOR THE PRODUCTION THEREOF, AND PROCESS FOR THE PRODUCTION OF MOLDINGS OF SILICA GLASS**

(30) Priority: 05.10.1995 JP 258936/95; 06.10.1995 JP 259994/95; 06.10.1995 JP 259996/95; 06.10.1995 JP 259997/95; 27.10.1995 JP 280728/95; 27.10.1995 JP 280729/95
(71) Applicant: MITSUBISHI CHEMICAL CORPORATION, Chiyoda-ku, Tokyo 100-0005 (JP)
(72) Inventor: KATSURO, Yoshio, Mitsubishi Chemical Corporation, Kitakyushu-shi, Fukuoka-ken 806 (JP); KATSUKI, Takanobu, Mitsubishi Chemical Corporation, Kitayuoshu-shi Fukuoka-ken 806 (JP); OISHI, Shoji Mitsubishi Chemical Corporation, Nishi-ku Kitakyushu-shi Fukuoka-ken 806 (JP)
(74) Representative: ter Meer, Nicolaus, Dipl.-Chem., Dr.
(86) International application number: JP9602916
(87) International publication number: WO9712837

(57) **Abstract**

A method for producing a synthetic quartz glass powder by calcining a silica gel powder obtained by hydrolysis of an alkoxysilane, characterized by using a reactor having a physical stirring means in the inside in hydrolysis-gelling step and initiating a regular stirring of a content in the reactor at least after finishing the charging of an alkoxysilane and water into the reactor.

## Description

### TECHNICAL FIELD

The present invention provides synthetic quartz glass powder usable in the field of semiconductors and optical cables, particularly synthetic quartz glass powder suitable as a starting material for producing ultrapure quartz glass product usable for producing semiconductors, which are used in a high temperature zone of at least 1,000°C.

### BACKGROUND ART

Heretofore, a crucible and other instruments used for producing semiconductor monocrystal were prepared by pulverizing natural quartz and melting the natural quartz powder thus obtained, but natural quartz contains various metal impurities even when it is of good quality and it was therefore unsatisfactory in respect to purity. Particularly, a highly pure monocrystal is required to achieve high performances demanded by semiconductor industries, and a crucible or other instruments which may contain metal impurities can not be used since the metal impurities contained adversely affect on performances of semiconductors. Accordingly, highly pure quartz glass powder prepared by synthesis has been lately required. In recent years, there has been proposed quartz glass prepared by sol-gel method using an alkoxysilane for a starting material as a silicic acid source having an excellent purity. For example, JP-A-62-176928 discloses to prepare synthetic quartz glass powder by hydrolyzing an alkoxysilane in the presence of an acid or alkali to prepare a silica gel, pulverizing the silica gel thus prepared, drying and then calcining.

As such a method for preparing synthetic quartz glass powder by sol-gel method, there have been proposed various methods, one example of which comprises hydrolyzing and condensation-polymerizing a hydrolyzable silicon compound such as an alkoxysilane as a starting material to prepare a wet gel and removing a by-produced alcohol and water by drying to obtain a dry gel. It is known to produce synthetic quartz glass powder by calcining the dry gel thus obtained. However, it has been found that if this method is carried out by operating a practical production line of large scale, a large amount of a black alien substance is generated and is contained in the synthetic quartz glass powder thus obtained after calcining. The black alien substance contained in the synthetic quartz powder generates CO or CO₂ gas when melted for forming a crucible or an ingot, and such a quartz crucible or core tube as containing bubbles causes various problems such as size unstability when used at a high temperature, liquid face vibration and crystal defects caused by breakage of bubbles when withdrawing monocrystal. However, up to now, a mechanism for preventing the occurrence of this black alien substance has not been fully clarified, and it is not clear what is a keypoint in the production to prevent the occurrence of black alien substance.

Particularly, unlike a laboratory scale production, in a practical production line of large scale, it has been difficult to control temperature and hydrolysis reaction, and since a large apparatus is used, contamination from an axis seal, valves or the like is caused, and it is not easy to specify the occurrence of black alien substance and this has been a great bar to mass production of synthetic quartz powder. Further, unlike a laboratory scale production, since the practical production line of large scale employs a large installation, contamination from an axis seal, valves and the like occurs, and it is not easy to specify the causes, and this has been a great bar to mass production of synthetic quartz powder. Further, unlike a laboratory scale production, since the practical production line of large scale employs a large installation, a pump for charging a starting material is made large-sized, and a cost for the installation becomes high. In order to reduce the cost, it is required to optimize the number of pumps to be installed to save useless investment. However, there are many unclear points in respect that what degree of pump performance is required and that what influence will be realized when a charging time of a starting material becomes long in the case of using a small pump performance. This point also becomes a great bar to mass production of synthetic quartz glass powder.

Further, a high productivity is required in a practical production line, and a method of a higher productivity is demanded.

In any of these cases, it is not preferable from a safety viewpoint to remain a poisonous alkoxysilane, and it is therefore desired to completely conduct hydrolysis reaction.

### DISCLOSURE OF THE INVENTION

The present inventors have studied and made an extensive research to obtain synthetic quartz glass powder having no inconveniences as mentioned above, and have discovered that the above-mentioned inconveniences can be overcome by conducting hydrolysis-gelling to obtain a wet gel at a specific maximum temperature in the hydrolysis-gelling step, that a wet gel having a low water content can be easily obtained at a high productivity by initiating a regular stirring of hydrolysis reaction at least after finishing charging an alkoxysilane and water in the charging of a starting material at the hydrolysis step, that the above specific maximum temperature can be easily attained in the hydrolysis-gelling step, and that occurrence of a black alien substance can be prevented in synthetic quartz glass powder which is a product after gelling and calcining. The present invention is based on this discovery. Thus, the present invention resides in a method for producing a synthetic quartz glass powder by calcining a silica gel powder obtained by hydrolysis of an alkoxysilane, characterized by using a reactor having a physical stirring means in the inside in hydrolysis-gelling step and initiating a regular stirring of a content in the reactor at least after finishing the charging an alkoxysilane and water into the reactor, and also resides in a method for producing a synthetic quartz glass powder by calcining a silica gel powder obtained by hydrolysis of an alkoxysilane, characterized by withdrawing a gel while keeping a liquid content of at least 50% after reaching a temperature of sol or wet gel of at least 60°C in hydrolysis-gelling step.

Further, the present inventors have discovered that a synthetic quartz glass powder prohibiting occurrence of bubbles during melt-forming can be obtained by washing a content in a reactor used in hydrolysis step at a specific stage. Thus, the present invention further resides in a method for producing a synthetic quartz glass powder by calcining a silica gel powder obtained by hydrolysis of an alkoxysilane, characterized by washing the inside of a reactor after withdrawing a wet gel from the reactor used in hydrolysis, disposing the washing liquid used in the washing and charging a starting material again.

Still further, the present inventors have discovered that a synthetic quartz glass powder prohibiting occurrence of bubbles during melt-forming by charging a starting material by a specific method in hydrolysis step. Thus, the present invention still further resides in a method for producing a synthetic quartz glass powder by calcining a silica gel powder obtained by hydrolysis of an alkoxysilane, characterized by charging either an alkoxysilane or water into a reactor in the charging of a starting material in hydrolysis step and charging the other after wetting a wall surface of the reactor with either the alkoxysilane or water.

Also, the present inventors have discovered that a synthetic quartz glass powder prohibiting occurrence of bubbles during melt-forming can be efficiently obtained by initiating stirring after charging either an alkoxysilane or water in the charging of a starting material in hydrolysis step and then finishing the charging of the other within a predetermined time. Thus, the present invention still further resides in a method for producing synthetic quartz glass powder by calcining a silica gel powder obtained by hydrolysis of an alkoxysilane, characterized by initiating stirring of a content in a reactor after charging either an alkoxysilane or water into the reactor and then finishing the charging of at least 90 wt% of the other within 15 minutes.

Also, the present inventors have discovered that many black alien substances occur after calcining if a time from charging a starting material to gelling is short in hydrolysis step. Thus, the present invention still further resides in a method for producing a synthetic quartz glass powder by calcining a silica gel powder obtained by hydrolysis of an alkoxysilane, characterized in that a time of at least from finishing the charging of an alkoxysilane and water to gelling is made at least 10 minutes in hydrolysis step.

Also, the present inventors have discovered that a synthetic quartz glass powder prohibiting occurrence of bubbles during melt-forming can be obtained by keeping a liquid temperature of a starting material charged in a reactor at not higher than 50°C, preferably not higher than 40°C, at least during charging an alkoxysilane and water in the charging of a starting material in hydrolysis step. Thus, the present invention still further resides in a method for producing a synthetic quartz glass powder by calcining a silica gel powder obtained by hydrolysis of an alkoxysilane by hydrolysis of a hydrolyzable silicon compound, characterized by keeping a liquid temperature of a starting material charged in a reactor at a temperature of not higher than 50°C at least during charging the alkoxysilane and water.

Hereinafter, the present invention is described in more details. A synthetic quartz glass powder of the present invention can be obtained by drying and calcining a silica gel obtained by hydrolysis of an alkoxysilane. The hydrolysis of an alkoxysilane by sol-gel method is carried out by reacting an alkoxysilane and water.

Preferable examples of an alkoxysilane used as a starting material include a C₁-C₄ lower alkoxysilane such as tetramethoxysilane or tetraethoxysilane or its oligomer, and these examples are preferable since they provide a black alien substance in a less amount in a synthetic quartz glass powder.

Water is used generally in an amount of from 1 to 10 times equivalents per equivalent of an alkoxy group in an alkoxysilane. If necessary, an organic solvent such as alcohols or ethers may be mixed therewith. Examples of an alcohol include methanol, ethanol, propanol, butanol and the like, and examples of an ether include acetones.

Further, an acid such as hydrochloric acid or acetic acid or an alkali such as ammonia may be used as a catalyst, but the catalyst is not always necessary. In order to obtain a synthetic quartz glass powder of high purity, it is preferable that all of a starting material alkoxysilane, water, a solvent and the like to be used have a high purity. It is possible to immediately obtain a gel by heating a hydrolyzed product, but the hydrolyzed product can be gelled in a few hours even by allowing to stand at normal temperature, and it is therefore possible to control a gelling time by adjusting a heating degree.

It is desired to take an embodiment of washing the inside of a reactor used in hydrolysis-gelling reaction after withdrawing a wet gel formed by the former hydrolysis-gelling but before charging a starting material next time. The term "starting material" used herein means at least an alkoxysilane and water, and the term "charging" means introduction into a reactor.

The present inventors have discovered that occurrence of a black alien substance in a synthetic quartz powder obtained by calcining can be prevented by conducting the above-mentioned operation. A degree of the washing conducted herein is to wet the whole inside surface of a reactor or to wet most part of the wet gel-attached portion of the inside of the reactor. Examples of the washing method include a method of stirring a washing liquid in a reactor, a jet-washing method, a shower washing method, and the like. The washing liquid used is preferably a material which does not have an adverse influence even when it remains in the reactor, and preferable examples include an alkoxysilane and water used as a starting material, and an alcohol formed during reaction. When these materials are used as a washing liquid, removal of the washing liquid can be made by withdrawing the major part thereof, and there is caused no problem even when a small amount of the washing liquid remains. When water is used as the washing liquid, it is particularly preferable to use an ultrapure water to prevent incorporation of an alien substance into a synthetic quartz powder which is an aimed product.

It is preferable to conduct the washing after withdrawing a wet gel obtained by the former hydrolysis-gelling step from a reactor but before charging a starting material next time. It is particularly preferable to conduct the washing within one day from withdrawing a wet gel, more preferably within a range of from immediately after withdrawing to several hours, to achieve a satisfactory effect of preventing occurrence of a black alien substance.

A mechanism of preventing occurrence of a black alien substance by this washing is not clear, but the following mechanisms are considered.

That is, the following effects can be achieved by washing.
(a) It is possible to remove contaminants from an axis seal to the outside of a reactor. It is possible to prevent incorporation of iron powder or the like remained as a black alien substance into a synthetic quartz powder.
(b) It is possible to remove a scale substance attached to the inside wall of a reactor. Since the scale substance has a dense and complicated structure unlike a normal silica gel, carbon derived from an organic group can not be easily removed by succeeding drying and calcining steps and is considered to remain as a black alien substance in a synthetic quartz glass powder obtained by calcining a gel. In order to effectively separate the scale substance, it is preferable to use a material such as polytetrafluoroethylene ("Teflon": trademark) or the like for the inside wall of a reactor, to which the gel is less attached.
(c) Particularly when using water as a washing liquid, water permeates the inside of a remaining wet gel by washing with water and reacts with an unreacted organic group present in the inside of a wet gel, and consequently, carbon does not remain at the time of calcining.

In this case, it is preferable to take an embodiment of charging either an alkoxysilane or water into a reactor to wet the wall face of the reactor with either the alkoxysilane or water and then charging the other. The wetting is conducted almost on the whole surface of the inside of a reactor or substantially on the major part of the inside of a reactor.

A method for wetting is not specially limited, examples of which include a method for introducing an alkoxysilane or water as a starting material into a reactor and stirring the content in the reactor or a method of charging an alkoxysilane or water as a starting material by a nozzle or the like in such a manner as to wash the inside wall of a reactor. Among these methods, a method of stirring is preferable since this method wets fully the inside wall of the reactor and prevents occurrence of a black alien substance although this reason is not clear. The stirring is conducted at such a degree as to wet the inside whole surface of the reactor or to wet the major part of the inside wall. It is not clear why occurrence of a black alien substance can be prevented by stirring, but it is considered to be the following mechanisms.

### (i) Effect of removing a scale substance on the inside wall of a reactor

By repeating the operation of the present invention at every batch, it is considered that a scale substance attached to the inside wall of a reactor can be separated and a thick or dense scale substance does not exist on the inside wall. As mentioned above, it is considered that the scale substance is one factor to cause occurrence of a black alien substance in the synthetic quartz glass powder obtained.

It is effective for separating the scale substance by the above-mentioned stirring to use a material such as polytetrafluoroethylene ("Teflon": trademark) for the inside wall of a reactor, to which a gel is less attached.

Also, it is effective to increase an amount of an alkoxysilane or water charged to wet the inside wall of a reactor, thereby raising the liquid surface. It is also effective to remove the alkoxysilane or water used to wet the inside surface from the reactor, but as evident from the Examples of the present specification, a part or the whole part of the alkoxysilane or water used to wet the wall surface can be used as a starting material as it is to achieve an effect for preventing occurrence of a black alien substance.

### (ii) Effect of preventing an unusual reaction on the inside wall in the vicinity of a jacket

In a mixture solution of water and an alkoxysilane, hydrolysis reaction rapidly proceeds particularly on the inside wall of a reactor, the temperature of which is raised by flowing a hot water through a jacket, and it is considered that a scale substance having a hardly combustible structure is formed. Stirring of water or an alkoxysilane alone in liquid is considered to be particularly effective since it is considered to achieve prevention of occurrence of such a scale substance. When a mixture solution of water and an alkoxysilane comes in contact with a remaining wet gel, it is considered that a dense layer is formed on the surface of the wet gel, but it is considered that the formation of such a dense layer can be prevented by employing the above-mentioned operation of the present invention.

Further, in the present invention, it is preferable to take an embodiment of charging either an alkoxysilane or water as a starting material into a reactor, initiating stirring of the content of the reactor and then finishing charging of at least 90 wt% of the other starting material within 15 minutes. The term "within 15 minutes" means that a time taken from initiating charging of the other starting material to finishing the charging is within 15 minutes.

In order to raise a productivity, it is effective to reduce a hydrolysis reaction time. Thus, it is not desirable to initiate stirring after finishing charging a starting material since it takes a long time to conduct hydrolysis reaction. Therefore, the present inventors tried to conduct stirring while charging a starting material and to carry out the charging of a starting material and the hydrolysis reaction at the same time, thereby reducing a hydrolysis time, but it has been discovered that a black alien substance is often generated after calcining when employing such a method.

Accordingly, the present inventors have further studied and discovered that a synthetic quartz glass powder having a black alien substance in a much smaller amount can be obtained after calcining by charging either an alkoxysilane or water into a reactor in the charging of a starting material in hydrolysis step, initiating stirring of the content of the reactor, and finishing charging of at least 90 wt% of the other starting material within 15 minutes. It is not clear why such an effect can be achieved, but the following mechanisms are considered.

In the hydrolysis reaction step, if a charging time of a starting material becomes long, hydrolysis reaction proceeds during charging and a liquid temperature is raised due to its reaction heat, thereby accelerating gelling. Therefore, a starting material charged at the final stage of charging is involved in a wet gel without fully proceeding with hydrolysis reaction. If a gel having such an unreacted organic group involved is baked, the organic group is considered to be carbonized to generate a black alien substance after calcining.

This is estimated from the fact that an amount of a black alien substance in the synthetic quartz glass powder obtained is increased when the charging time exceeds 15 minutes. Also, the stirring degree is sufficient if the mixture of water and an alkoxysilane becomes substantially homogeneous.

With regard to the charging time, it is preferable to employ such a large liquid-supplying pump as to be able to finish charging in a short time since an amount to be charged becomes large in the case of a practical production of large scale (a charged amount of a starting material is at least about 20 liters). Further, in the practical production line, it is preferable to strictly control a charging time under the above-mentioned conditions since a charging time generally exceeds 15 minutes due to the blockage of a filter provided on a liquid-supplying line.

In order to raise a productivity, it is effective to reduce a hydrolysis reaction time. Heretofore, it was general to charge a starting material at a liquid temperature of normal temperature, but there was a tendency that a reaction time became long since the initial reaction temperature was low. As a matter of fact, if a temperature at the time of finishing charging a starting material is higher, a reaction time becomes short, thereby raising a production efficiency. However, as described below, the present inventors have discovered that a product quality becomes poor when the charging of a starting material is finished at a temperature higher than a certain level of temperature although such a high charging temperature reduces a reaction time. Thus, a temperature at which the charging of a starting material is finished, should be at most 50°C, preferably at most 40°C and generally at least 20 °C, more preferably in the range of from 30 to 40°C. If a liquid temperature of a starting material is too low, a hydrolysis reaction time becomes long, thereby reducing a productivity. On the contrary, if a liquid temperature of a starting material is too high, a black alien substance is generated in a large amount in the product, thereby disqualifying as a starting material for a quartz glass product. It is not clear why a black alien substance is liable to be easily generated when a temperature at the time of finishing charging a starting material is too high, but the following mechanism can be predicted. When a temperature at the time of finishing charging a starting material is high, hydrolysis reaction rapidly proceeds to form a heterogeneous gel. The heterogeneous gel contains a large amount of unreacted organic groups which are not fully hydrolyzed, and it is considered that the unreacted organic groups are not removed by calcining and remained as unburned carbon in a synthetic quartz glass powder, which makes a black alien substance. Further, when a temperature at the time of finishing charging a starting material is high, volatile components such as an alcohol or an alkoxysilane evaporate during hydrolysis reaction and are likely to have some influence on a composition of the gel.

The temperature at the time of finishing the charging of a starting material can be controlled by adjusting a jacket temperature of a reactor during charging and a starting material temperature before charging, but the temperature of charging a starting material can also be adjusted by reaction heat while controlling a charging speed of a starting material.

In this manner, by controlling the temperature at the time of finishing the charging of a starting material to at most 50°C, preferably at most 40°C, generally at least 20 °C, more preferably in the range of from 30 to 40°C, a synthetic quartz glass powder products containing only a extremely small amount of a black alien substance can be obtained after calcining.

The above operation can be efficiently practiced preferably by using a reactor equipped with a physical stirring means in the inside. Examples of the physical stirring means used herein include a mixing blade, an impeller and any other means which can stir the content of a reactor. Among them, a ribbon type mixing blade is particularly preferable since it can easily and fully stir the content of a reactor and a gel obtained can be easily withdrawn from the reactor.

According to the above method, even in a case of using a reactor having a large capacity of at least 150 lit., a wet gel which can provide a synthetic quartz glass powder containing only a small amount of black alien substance by calcining can be efficiently formed, and this is industrially advantageous. Thus, the present invention achieves a remarkable effect particularly when using a reactor having a large capacity of at least 150 lit.

In the above-mentioned manner, by newly setting a charging speed of a starting material which is minimally required, a size of a pump to be fixed can be controlled to a minimum size, thereby providing an advantage or reducing a cost.

If a starting material is charged and hydrolysis-gelling reaction is conducted in accordance with the above-mentioned method, it is possible to easily control an amount of a black alien substance occurred in a synthetic quartz glass powder which is a product obtained by calcining a silica gel.

The silica gel obtained by hydrolysis-polycondensation of an alkoxysilane in accordance with the above-mentioned method, is a jelly-like wet gel containing a large amount of water content, alcohol and the like. By evaporating a liquid contained in the wet gel to reduce the liquid content of the wet gel, the jelly-like gel is cured to produce a material which can be easily handled. The liquid content of the wet gel has a large influence on easiness of withdrawal from a reactor and a heat load in a drying step. For example, the easiness of withdrawing the wet gel from a reactor depends on the liquid content, and the liquid content in the present invention is at least 50 wt%, preferably from 64 to 73 wt%, more preferably from 68 to 70 wt%. Also, with regard to the heat load in a drying step, it is advantageous to employ a lower liquid content. On the other hand, if the liquid content is less than 50 wt%, there is raised a problem generating fine powders during pulverizing the gel. The term "liquid content" used herein means a weight-reducing rate when the gel is heated at 160°C by an infrared ray heater and its weight reaches a constant value. The weight-reducing rate can be measured by using an infrared water content meter such as "FD-230 type" (manufactured by Ketto Kagaku Kenkyusho Ltd.).

The liquid content can be controlled by a method of raising a temperature of a wet gel or a method of reducing a pressure, and the liquid content is preferably controlled by conducting the two methods at the same time. The temperature of the wet gel can be raised by raising a jacket temperature, but when the jacket temperature is high at the initial stage of hydrolysis reaction, hydrolysis reaction starts during charging a starting material to produce a heterogeneous wet gel having unreacted organic groups remained, which produces an undesired black alien substance after calcining. On the other hand, when raising the jacket temperature after gelling, an operation becomes unpreferably complicated since it is necessary to change the jacket temperature during operation. Also in this case, since heat conductivity of a wet gel is poor, an ununiform temperature distribution is unpreferably formed between the vicinity of the jacket and the central part. Thus, this method is also unpreferable.

Under these circumstances, in the present invention, a reactor having a physical stirring means provided in the inside is used in the above-mentioned hydrolysis-gelling step, and regular stirring of the content of the reactor is initiated after finishing the charging of at least an alkoxysilane and water into the reactor. The present inventors have discovered that the following effects can be achieved by employing such an embodiment.

By employing the above-mentioned specific charging method of the present invention, the maximum reached temperature of a wet gel is raised, and the liquid content of the wet gel can be reduced without controlling a jacket temperature. As mentioned above, it has been discovered by the present inventors that by reducing the liquid content of the wet gel, the wet gel can be easily withdrawn from the hydrolysis reaction container and heat load can be reduced in the succeeding drying step, thereby effectively improving a productivity.

Further, it has also been discovered by the present inventors that when the wet get thus obtained is dried and baked, a synthetic quartz powder having only a very small amount of black alien substance can be obtained, although its mechanism is not clear.

The "regular stirring" conducted herein means a stirring to disperse an alkoxysilane and water in the state of phase separation after charging a starting material, and the stirring is sufficient if a homogeneous mixture of an alkoxysilane and water can be obtained. When the mixture is heterogeneous, it looks white-cloudy and can be visually observed. The regular stirring is conducted usually at a revolution number of at least 5 rpm.

A temperature of a wet gel is raised by reaction heat in hydrolysis-gelling step, and is then lowered by radiation of heat, and the "maximally reached temperature" of the wet gel means a maximum temperature of the wet gel reached during this cycle. In the present invention, the following effects can be achieved by adjusting the maximally reached temperature to at least 60°C.

It has been discovered by the present inventors that when the maximally reached temperature is lower than 60°C, a black alien substance is liable to occur in a product obtained after calcining.

It is not clear why the liquid content of the wet gel is lowered and the maximally reached temperature of the wet gel is raised by the specific charging method of the present invention, but it is considered that these effects are achieved in the following manner.

It is considered that the liquid content of the wet gel is lowered on the following ground. When a starting material is charged in a static state without stirring, water and an alkoxysilane are maintained in the state of separated two layers, and therefore hydrolysis reaction is slow at the stage of charging a starting material, and the charging of a starting material is finished without the hydrolysis reaction being carried out so much. Consequently, when regular stirring is carried out after charging a starting material, hydrolysis reaction rapidly proceeds and its reaction heat generated raises a temperature of a reaction solution and accelerates evaporation of a by-produced alcohol and water from a wet gel without supplying an external heat energy, thereby lowering a liquid content.

Since a heat conductivity of the wet gel is low, in the case of heat conducted from a jacket, a temperature distribution is formed between the vicinity of the jacket and the central part, but in the case of using reaction heat of hydrolysis-gelling reaction in accordance with the present invention, the content of a reactor can be uniformly heated, and this method is preferable also in respect to operation efficiency since an operation to change a jacket temperature is not necessary. Regardless of the method of the present invention, if stirring is carried out during charging a starting material, a mixed state of an alkoxysilane and water becomes good enough to proceed hydrolysis reaction during charging a starting material, and accordingly, reaction heat is lost and a maximally reached temperature becomes low. Therefore, it is important for the method of the present invention to carry out the charging of a starting material in a static state. Thus, it is essential for a reactor to have a physical stirring means provided in the inside of the reactor in order to rapidly proceed hydrolysis reaction after charging.

Examples of the physical stirring means include a stirring blade, an impeller and any other stirring means to stir the content of a reactor. Among them, a ribbon type stirring blade is particularly preferable since the content can be fully stirred and a produced gel can be easily withdrawn from the reactor.

Also, according to the method of the present invention, a wet gel for producing a synthetic quartz glass powder having only a small amount of a black alien substance by calcining can be efficiently formed even in a reactor having a large capacity of at least 150 lit., this being advantageous for industrial production.

According to the method of the present invention, it is considered that generation of a black alien substance contained in a synthetic quartz glass powder obtained by calcining a gel is reduced on the grounds that a reaction speed of hydrolysis-polycondensation is accelerated by rise of a gelling temperature and that the equilibrium of hydrolysis reaction moves toward acceleration of hydrolysis reaction by evaporating methanol, thereby reducing a remaining amount of unreacted organic groups responsible for the generation of a black alien substance after calcining.

Also, it has been discovered that a generation amount of a black alien substance contained in a product after calcining can be reduced by adjusting a time taken from finishing the charging of at least both of an alkoxysilane and water to gelling to at least 10 minutes. It is not clear why such an effect can be achieved, but it is considered that this is due to the following mechanism.

If a time taken from finishing the charging of a starting material to gelling is short, a gel is formed without an alkoxysilane being sufficiently hydrolyzed, and consequently a wet gel having the aimed composition can not be obtained or an unreacted organic group remains in the wet gel. It is considered that the gel absorbing such an unreacted starting material or the gel having an unreacted organic group generates a black alien substance after calcining since such an organic group is carbonized. In order to prevent the generation of a black alien substance, it is necessary to completely burn a remaining carbon of an organic group by prolonging a calcining time or by increasing an oxygen concentration at the time of calcining, but such a special operation remarkably lowers a productivity.

Further, in such a case, a toxic unreacted alkoxysilane is included in a wet gel, and is disposed as it is. Particularly, it is known that vapor of tetramethoxysilane causes separation of cornea, bronchitis and other diseases to human, and it is therefore unpreferable from a safety viewpoint that an unreacted starting material remains even in such a very small amount.

The aimed effect can be achieved by adjusting a time taking from finishing the charging of a starting material to gelling to at least 10 minutes, and even when this time is much longer, properties of a gel obtained and a synthetic quartz powder obtained by calcining the gel are not lowered. However, in view productivity, it is practical to adjust this time within a few hours, preferably within one hour from the charging.

Examples of a method for adjusting this time from finishing the charging of a starting material to gelling include a method for delaying a hydrolysis reaction speed by maintaining a liquid temperature in a reactor low until finishing the charging of a starting material and a method for prolonging a time required for gelling by reducing a charging time of a starting material, and these methods can be optionally employed.

The state of gelling of a reaction content can be easily visually recognized. Generally, it is observed that a liquid immediately before gelling is in a boiling state and bubbles move round and round and its viscosity is rapidly increased and the movement of bubbles stops to gel.

Thus, by charging a starting material and conducting hydrolysis reaction in accordance with the above-mentioned method, a synthetic quartz powder containing only a small amount of black alien substance after calcining can be obtained at a high productivity with an improved safety.

The wet gel thus obtained is previously dried or is pulverized as it is to prepare a material having an optional particle size. Drying, pulverizing and adjusting a particle size can be made by known methods. Since a particle size of a synthetic quartz glass powder finally obtained by calcining is controlled by a particle distribution of the gel thus obtained, an optimum particle size of silica gel is determined by considering the desired particle size distribution of the finally obtained synthetic quartz glass powder and shrinkage of particles by drying and calcining.

Generally, a wet gel having a particle size of at most 1,000 microns, preferably at most 900 microns, is prepared and is heated at a temperature of at least 100°C to obtain a dry gel having a water content of at most 30 wt%, preferably at most 20 wt%, more preferably in the range of from 1 to 10 wt%, by removing water, a solvent and an alcohol produced by hydrolysis reaction. By preparing a dry gel having a particle size distribution of from 100 to 500 microns by classifying before heating or after heating, a particle size distribution of a synthetic quartz glass powder obtained by calcining can be easily adjusted within a desired range.

The powdery dry gel thus obtained is further baked to remove carbon and silanol of a residual group and to close pores, thereby producing a synthetic quartz glass powder.

An amount of black alien substance contained in the synthetic quartz glass powder obtained in the present invention is very small, and when the synthetic quartz glass powder thus obtained is melt-formed, an ingot or crucible having only an extremely small amount of bubbles can be prepared.

### EXAMPLES

The present invention is further illustrated by the following Examples.

### EXAMPLE 1

25 kg of tetramethoxysilane and 15 kg of ultrapure water were charged into a horizontal type cylindrical reactor equipped with a jacket having a ribbon type stirring blade, and hydrolysis-gelling was carried out while passing a hot water of 45°C through the jacket, and a wet gel obtained was withdrawn from a valve provided on the bottom of the reactor by rotating the stirring blade at 10 rpm, and 40 kg of ultrapure water was then immediately charged into the reactor and was stirred at 20 rpm for 5 minutes, and this internal liquid was withdrawn, thus washing the inside of the reactor. Thereafter, 15 kg of ultrapure water was charged and 25 kg of tetramethoxysilane was charged, and after passing a hot water of 45°C through the jacket, the contents were stirred at 20 rpm for 30 minutes. Thereafter, the stirring was stopped, and the contents were allowed to stand for 30 minutes while continuing to pass the liquid through the jacket. Thereafter, the rotation of the stirring blade was initiated again (10 rpm), and the valve on the bottom of the reactor was opened and a massive gel having a fist size was withdrawn from the reactor.

The massive gel thus obtained was pulverized by a SUS304-made corn mill type pulverizer, and the powdery gel thus obtained was dried at 200°C for 5 hours by using a vacuum dryer to obtain a dry gel. The dry gel thus obtained was heated at 160°C by an infrared ray heater until its weight reached a constant value, thereby determining a weight-reducing rate, and the dry gel was measured to have a water content of 1%.

Thereafter, the dry gel was classified to adjust a particle size in the range of from 106 to 500 µm. 30 g of the dry gel thus classified was charged into a quartz glass container, and was heated to 800°C for 1 hour in the atmosphere and was maintained at 800°C for 10 minutes, and was withdrawn to be rapidly cooled. A number of black alien substances in the baked product was visually measured. As this result, the number of a black alien substance in 10 g of the product (about 1,000,000 particles) was 0, which meant that no black alien substance was detected. The above procedure of charging 40 kg of ultrapure water and the succeeding procedures were repeated again, and 2 black alien substances were detected.

### COMPARATIVE EXAMPLE 1

In the same apparatus as used in Example 1, 15 kg of ultrapure water was immediately charged without washing the inside after the second wet gel withdrawal in Example 1, and 25 kg of tetramethoxysilane was further charged, and stirring was carried out for 30 minutes after passing a hot water of 45°C through a jacket. Thereafter, the stirring was stopped, and the contents were allowed to stand for 30 minutes. Thereafter, the rotation of the stirring blade was initiated again, and the valve provided on the bottom of the reactor was opened to withdraw a massive gel from the reactor. The succeeding operations were made in the same manner as in Example 1. As this result, 30 black alien substances were detected in 10 g of the product. The same procedure was repeated, and as this result, 65 black alien substances were detected.

### EXAMPLE 2

After withdrawing a wet gel, 15 kg of ultrapure water was charged through a ball valve provided on the upper central part of a horizontal type cylindrical reactor equipped with a jacket having a ribbon type stirring blade, and stirring was carried out at 20 rpm for 5 minutes, and the stirring was stopped. Thereafter, 25 kg of tetramethoxysilane was charged through a ball valve provided on the upper part of the reactor separately from the above-mentioned valve for ultrapure water, and a hot water of 45°C was passed through a jacket, and stirring was conducted at 20 rpm for 30 minutes. Thereafter, the stirring was stopped, and the contents were allowed to stand for 30 minutes while continuing to pass the hot water through the jacket. Thereafter, the rotation of the stirring blade was initiated again (10 rpm), and a valve provided on the bottom of the reactor was opened to withdraw a massive gel having a fist size from the reactor.

The massive gel thus obtained was pulverized by a SUS304-made corn mill type pulverizer, and the powdery gel thus obtained was dried at 200°C for 5 hours by using a vacuum dryer to obtain a dry gel. The dry gel thus obtained was heated by an infrared ray heater at 160°C until its weight reached a constant value, thereby determining a weight-reducing rate, and the dry gel was measured to have a water content of 1%. Thereafter, the dry gel thus obtained was classified to adjust a particle size in the range of from 106 to 500 µm. 30g of the dry gel thus classified was charged into a quartz glass container, and was heated to 800°C for 1 hour in the atmosphere, and was maintained at 800°C for 10 minutes, and was then withdrawn to be rapidly cooled. A number of black alien substances in the baked product was visually measured. As this result, 1 black alien substance was detected in 10 g (about 1,000,000 particles) of the product. The above operation of charging ultrapure water and the succeeding operations were repeated again, and 3 black alien substances were detected.

### EXAMPLE 3

In the same apparatus as used in Example 2, after the second wet gel withdrawal, 15 kg of ultrapure water and 25 kg of tetramethoxysilane were charged, and stirring was then carried out at 20 rpm for 5 minutes, and the stirring was stopped. Thereafter, 15 kg of ultrapure water was charged, and stirring was carried out at 20 rpm for 30 minutes after passing a hot water of 45°C through a jacket. Thereafter, the stirring was stopped, and the contents were allowed to stand for 30 minutes while continuing to pass the hot water through the jacket. Thereafter, the rotation of the stirring blade was initiated again (10 rpm), and the valve provided on the bottom of the reactor was opened to withdraw a massive gel from the reactor. The succeeding operations were quite the same as in Example 2. As this result, 5 black alien substances were detected in 10 g of the product. The above operation of charging ultrapure water and the succeeding operations were repeated again, and 8 black alien substances were detected.

### EXAMPLE 4

In the same apparatus as used in Example 2, after the second wet gel withdrawal in Example 3, 40 kg of ultrapure water was charged, and stirring was carried out at 20 rpm for 5 minutes, and 25 kg of the charged ultrapure water was withdrawn, and 15 kg of the charged ultrapure water was remained in the reactor. Thereafter, 25 kg of tetramethoxysilane was charged, and stirring was carried out at 20 rpm for 30 minutes after passing a hot water of 45 °C through a jacket. Thereafter, the stirring was stopped, and the contents were allowed to stand for 30 minutes while continuing to pass the hot water through the jacket. Thereafter, the rotation of the stirring blade was initiated again (10 rpm), and the valve provided on the bottom of the reactor was opened to withdraw a massive gel from the reactor. The succeeding operations were quite the same as in Example 2. As this result, 2 black alien substances were detected in 10 g of the product.

### COMPARATIVE EXAMPLE 2

In the same apparatus as used in Example 1, after the wet gel withdrawal in Example 4, 15 kg of ultrapure water and 25 kg of tetramethoxysilane were charged, and stirring was carried out at 20 rpm for 30 minutes after passing a hot water of 45°C through a jacket. Thereafter, the stirring was stopped, and the contents were allowed to stand for 30 minutes while passing the hot water through the jacket. Thereafter, rotation of the stirring blade was initiated again, and the valve provided on the bottom of the reactor was opened to withdraw a massive gel from the reactor. The succeeding operations were the same manner as in Example 2. As this result, 30 black alien substances were detected in 10 g of the product. The above operation of charging ultrapure water and the succeeding operations were repeated again, and 65 black alien substances were detected.

### EXAMPLE 5

15 kg of ultrapure water was charged into a horizontal type cylindrical reactor equipped with a jacket having a ribbon type stirring blade, and stirring was initiated at 20 rpm. Thereafter, 25 kg of tetramethoxysilane was charged for 3 minutes. The jacket temperature was adjusted to 45 °C. After a homogeneous sol was formed, stirring was stopped, and the contents were allowed to stand for 30 minutes. Thereafter, the rotation of the stirring blade was initiated at 10 rpm again, and the valve provided on the bottom of the reactor was opened to withdraw a massive wet gel having a fist size from the reactor.

The massive wet gel thus obtained was pulverized by a SUS304-made corn mill type pulverizer, and the powdery gel thus obtained was dried at 200°C for 5 hours by using a vacuum dryer to obtain a dry gel. The dry gel thus obtained was heated to 160°C by an infrared ray heater until its weight reached a constant value, thereby determining a weight-reducing rate, and the dry gel was measured to have a water content of 1 wt%.

Thereafter, the dry gel thus obtained was classified to adjust a particle size in the range of from 106 to 500 µm. 100 g of the dry gel thus obtained was charged into a quartz glass container, and was heated to 1,000°C for 2 hours in the atmosphere, and was maintained at 1,000°C for 10 minutes, and was withdrawn to be rapidly cooled. A synthetic quartz glass powder obtained by calcining was placed in a thickness of about 1 mm in a laboratory dish to visually measure a number of black alien substances in the synthetic quartz glass powder product.

As this result, 2 black alien substances were detected in 50 g of the synthetic quartz glass powder.

By using the reactor after withdrawing the gel, the operation of charging ultrapure water and the succeeding operations were repeated twice. As this result, 3 black alien substances and 5 black alien substances were detected respectively in 50 g of each of the synthetic quartz glass powders thus obtained.

### COMPARATIVE EXAMPLE 3

By using the reactor used in Example 5, after passing a hot water of 45°C through a jacket, 15 kg of ultrapure water was charged and the rotation of the stirring blade was initiated at 20 rpm. Thereafter, the charging of tetramethoxysilane was initiated at a feeding speed of 1 kg/min. As this result, gelling was caused during feeding (20 minutes after the initiation of feeding). Also, a large amount of a toxic unreacted tetramethoxysilane was remained in the wet gel. The wet gel was detoxified with alkali and was disposed.

### COMPARATIVE EXAMPLE 4

In the reactor used in Example 5, after passing a hot water of 40°C through a jacket, 15 kg of ultrapure water was charged, and the rotation of the stirring blade was initiated at 20 rpm. Thereafter, 25 kg of tetramethoxysilane was charged for 25 minutes. When a homogeneous sol was formed, stirring was stopped. The succeeding operations were the same as in Example 5.

As this result, 26 black alien substances were detected in 50 g of the synthetic quartz glass powder thus obtained. By using the reactor after withdrawing the gel, the operation of charging ultrapure water and the succeeding operations were repeated, and 34 black alien substances were detected in 50 g of the synthetic quartz glass powder thus obtained.

### EXAMPLE 6

15 kg of ultrapure water was charged into a horizontal type cylindrical reactor equipped with a jacket having a ribbon type stirring blade, and 25 kg of tetramethoxysilane was then charged. Thereafter, stirring was initiated at 20 rpm. The jacket temperature was adjusted to 40°C. When a homogeneous sol was formed, the stirring was stopped, and the contents were allowed to stand for 30 minutes. The maximally reached temperature of the contents was 63°C. Thereafter, a pressure in the reactor was reduced to 200 Torr, and was maintained for 30 minutes. The rotation of the stirring blade was initiated again (10 rpm), and the valve provided on the bottom of the reactor was opened to withdraw a massive wet gel having a fist size from the reactor. The wet get was heated to 160°C by an infrared ray heater until its rate reached a constant value, thereby determining a weight-reducing rate, and the wet gel was measured to have a liquid content of 68 wt%.

The massive wet gel thus obtained was pulverized by a SUS304-made corn mill type pulverizer, and the powdery wet gel thus obtained was dried at 200°C for 5 hours by a vacuum dryer to obtain a dry gel. The water content of the dry gel thus obtained was measured in the same manner as in the measurement of the liquid content of the wet gel, and was 1%. Thereafter, the powdery dry gel thus obtained was classified to adjust a particle size in the range of from 106 to 500 µm. 100 g of the dry gel thus classified was charged into a quartz glass container, and was heated to 1,000 °C for 2 hours in the atmosphere, and was maintained at 1,000 °C for 10 minutes, and was withdrawn to be rapidly cooled. In this manner, a synthetic quartz glass powder product was obtained. The synthetic quartz glass powder thus obtained was placed in a thickness of about 1 mm in a laboratory dish, and a number of black alien substances in the product was visually measured.

As this result, 5 black alien substances were detected in 50 g (about 5,000,000 as a particle number) of the product.

### EXAMPLE 7

In the reactor used in Example 6, 15 kg of ultrapure water was charged, and 25 kg of tetramethoxysilane was charged, and stirring was initiated at 20 rpm. The jacket temperature was adjusted to 65°C. When a homogeneous sol was formed, the stirring was stopped, and the contents were allowed to stand for 30 minutes. The maximally reached temperature of the contents was 74°C.

The succeeding operations were the same as in Example 6. The liquid content of the wet gel thus obtained was 66 wt%. 3 Black alien substances were detected in 50 g of the synthetic quartz glass powder thus obtained by calcining.

### COMPARATIVE EXAMPLE 5

In the reactor used in Example 6, 15 kg of ultrapure was charged, and the rotation of the stirring blade was initiated at 20 rpm, and 23 kg of tetramethoxysilane was charged. The jacket temperature was adjusted to 40°C.

When a homogeneous sol was formed, the stirring was stopped. Thereafter, the contents was allowed to stand for 30 minutes. The maximally reached temperature of the contents was 58°C.

The succeeding operations were the same as in Example 6. The liquid content of the wet gel thus obtained was 71 wt%. 26 Black alien substances were detected in 50 g of the synthetic quartz glass powder thus obtained. By using the reactor after withdrawing the wet gel, the operation of charging ultrapure water and the succeeding operations were repeated, and the maximally reached temperature of the contents was 57°C, and the liquid content of the wet gel was 71 wt%, and 34 black alien substances were detected in 50 g of the synthetic quartz glass powder thus obtained.

### EXAMPLE 8

In a horizontal type cylindrical reactor equipped with a jacket having a ribbon type stirring blade, 15 kg of ultrapure water was charged, and stirring was initiated at 20 rpm. Thereafter, 25 kg of tetramethoxysilane was charged for 3 minutes. The temperature of a hot water passed through the jacket was 45°C. Thereafter, when a homogeneous sol was formed, the stirring was stopped, and the contents were allowed to stand for 30 minutes. A change of the contents was visually observed through a glass window of the reactor, and the contents were gelled at a lapse of 40 minutes after finishing the charging. Thereafter, the rotation of the stirring blade was initiated again, and the valve provided on the bottom of the reactor was opened to withdraw a massive gel having a fist size from the reactor.

The massive gel thus obtained was pulverized by a SUS304-made corn mill type pulverizer, and the powdery gel thus obtained was dried at 200°C for 5 hours by using a vacuum dryer to obtain a dry gel. Thereafter, the dry gel thus obtained was classified to adjust a particle size in the range of from 106 to 500 µm. 100 g of the dry gel thus classified was charged into a quartz glass container, and was heated to 1,000°C for 2 hours in the atmosphere, and was maintained at 1,000°C for 10 minutes, and was withdrawn to be rapidly cooled. A number of black alien substances in the baked product was visually measured.

As this result, 2 black alien substances were detected in 50 g (about 5,000,000 as a particle number) of the product. Also, the same procedure was further repeated twice, and 3 black alien substances and 5 black alien substances were detected in each of the products.

### EXAMPLE 9

In the same reactor as used in Example 8, 15 kg of ultrapure water was charged, and 25 kg of tetramethoxysilane was charged for 25 minutes, and stirring was initiated at 20 rpm. The temperature of a hot water passed through the jacket was adjusted to 45°C. When a homogeneous sol was formed, the stirring was stopped, and the contents were allowed to stand for 30 minutes. The contents were gelled at a lapse of 25 minutes after finishing the charging.

The succeeding operations were the same as in Example 1

As this result, 4 black alien substances were detected in 50 g of the product.

### EXAMPLE 10

In the same reactor as used in Example 8, 15 kg of ultrapure water was charged, and 25 kg of tetramethoxysilane was charged for 15 minutes, and stirring was initiated. The jacket temperature was adjusted to 65°C. When a homogeneous sol was formed, the stirring was stopped, and the contents were allowed to stand for 30 minutes. The contents were gelled at a lapse of 13 minutes after finishing the charging.

The succeeding operations were the same as in Example 8.

As this result, 6 black alien substances were detected in 50 g of the product.

### EXAMPLE 11

In the same reactor as used in Example 8, 15 kg of ultrapure water was charged, and 25 kg of tetramethoxysilane was charged for 3 minutes, and stirring was initiated at 20 rpm. The temperature of a hot water passed through the jacket was adjusted to 65°C. When a homogeneous sol was formed, the stirring was stopped, and the contents were allowed to stand for 30 minutes. The contents were gelled at a lapse of 15 minutes after finishing the charging.

The succeeding operations were the same as in Example 8.

As this result, 3 black alien substances were detected in 50 g of the product.

### COMPARATIVE EXAMPLE 6

In the same reactor as used in Example 8, 15 kg of ultrapure water was charged, and stirring was initiated at 20 rpm. Thereafter, 25 kg of tetramethoxysilane was charged for 25 minutes. The temperature of a hot water passed through the jacket was adjusted to 40°C. When a homogeneous sol was formed, the stirring was stopped, and the contents were allowed to stand for 30 minutes. The contents were gelled at a lapse of 5 minutes after finishing the charging.

The succeeding operations were the same as in Example 8.

As this result, 26 black alien substances were detected in 50 g of the product. Also, the operation of charging 15 kg ultrapure water and the succeeding operations were repeated, and 34 black alien substances were detected.

### EXAMPLE 12

In a horizontal type cylindrical reactor equipped with a jacket having a ribbon type stirring blade, 15 kg of ultrapure water was charged, and stirring was initiated at 20 rpm. Thereafter, 25 kg of tetramethoxysilane was charged for 3 minutes. A liquid temperature after charging was 32 °C A hot water of 45°C was passed through the jacket, and when a homogeneous sol was formed, stirring was stopped, and the contents were allowed to stand for 30 minutes. Thereafter, the rotation of the stirring blade was initiated again, and the valve provided on the bottom of the reactor was opened to withdraw a massive gel from the reactor.

The massive gel thus obtained was pulverized by a SUS304-made corn mill type pulverizer, and the powdery gel thus obtained was dried at 200°C for 5 hours by a vacuum dryer to obtain a dry gel. Thereafter, the dry gel thus obtained was classified to adjust a particle size in the range of from 106 to 500 µm. 100 g of the dry gel thus classified was charged into a quartz glass container, and was heated to 1,000 °C for 2 hours in the atmosphere, and was maintained at 1,000 °C for 10 minutes, and was withdrawn to be rapidly cooled. A number of black alien substances in the product thus baked was visually measured.

As this result, 2 black alien substances were detected in 50 g (about 5,000,000 as a particle number) of the product. Also, the same procedures were further repeated again twice, and 3 black alien substances and 5 black alien substances were detected in each of the products.

### EXAMPLE 13

In the same reactor as used in Example 12, 15 kg of ultrapure water was charged, and 25 kg of tetramethoxysilane was charged for 25 minutes, and stirring was initiated at 20 rpm. A liquid temperature after charging was 42°C. A hot water of 45°C was passed through the jacket, and when a homogeneous sol was formed, the stirring was stopped, and the contents were allowed to stand for 30 minutes. The succeeding operations were the same as in Example 12. As this result, 4 black alien substances were detected in 50 g of the product.

### EXAMPLE 14

In the same reactor as used in Example 12, 15 kg of ultrapure water was charged, and 25 kg of tetramethoxysilane was charged for 15 minutes, and stirring was initiated at 20 rpm. A liquid temperature after charging was 38°C. The jacket temperature was adjusted to 65°C. Thereafter, when a homogeneous sol was formed, the stirring was stopped, and the contents were allowed to stand for 30 minutes. The succeeding operations were the same as in Example 12. As this result, 6 black alien substances were detected in 50 g of the product.

### EXAMPLE 15

In the same reactor as used in Example 12, 15 kg of ultrapure water was charged, and 25 kg of tetramethoxysilane was charged for 3 minutes, and stirring was initiated. A liquid temperature after stirring was adjusted to 36°C. A hot water of 45°C was passed through the jacket, and when a homogeneous sol was formed, the stirring was stopped, and the contents were allowed to stand for 30 minutes. The succeeding operations were the same as in Example 12. As this result, 3 black alien substances were detected in 50 g of the product.

### COMPARATIVE EXAMPLE 7

In the same reactor as used in Example 12, 15 kg of ultrapure water was charged, and stirring was initiated. Thereafter, 25 kg of tetramethoxysilane was charged for 25 minutes. A liquid temperature after charging was 55°C. The jacket temperature was adjusted to 40°C. When a homogeneous sol was formed, the stirring was stopped, and the contents were allowed to stand for 30 minutes. The succeeding operations were the same as in Example 12. As this result, 26 black alien substances were detected in 50 g of the product. Also, the same operations were repeated, and 34 black alien substances were detected.

### INDUSTRIAL APPLICABILITY

According to the present invention, a synthetic quartz glass powder having only a very small amount of black alien substance, suitable as a starting material for a high purity quartz glass product, can be efficiently obtained.

## Claims

1. A method for producing a synthetic quartz glass powder by calcining a silica gel powder obtained by hydrolysis of an alkoxysilane, characterized by using a reactor having a physical stirring means in the inside in hydrolysis-gelling step and initiating a regular stirring of a content in the reactor at least after finishing the charging of an alkoxysilane and water into the reactor.

2. The method for producing a synthetic quartz glass powder by calcining a silica gel powder obtained by hydrolysis of an alkoxysilane according to Claim 1, characterized by washing the inside of a reactor after withdrawing a wet gel from the reactor used in hydrolysis, disposing the washing liquid used in the washing and charging a starting material again.

3. The method for producing a synthetic quartz glass powder according to Claim 2, wherein the washing is carried out by using water.

4. The method for producing a synthetic quartz glass powder according to Claim 2 or 3, wherein the washing is carried out by using ultrapure water.

5. The method for producing a synthetic quartz glass powder according to any one of Claims 2 to 4, wherein the washing is carried out by using an alcohol.

6. The method for producing a synthetic quartz glass powder according to Claim 5, wherein the alcohol is methanol.

7. The method for producing a synthetic quartz glass powder according to any one of Claims 2 to 6, wherein the washing is carried out by using an alkoxysilane.

8. The method for producing a synthetic quartz glass powder according to Claim 7, wherein the alkoxysilane is tetramethoxysilane.

9. The method for producing a synthetic quartz glass by calcining a silica gel powder obtained by hydrolysis of an alkoxysilane according to any one of Claims 1 to 8, characterized by charging either an alkoxysilane or water into a reactor in the charging of a starting material in hydrolysis step and charging the other after wetting a wall surface of the reactor with either the alkoxysilane or water.

10. The method for producing a synthetic quartz glass powder according to Claim 9, wherein the wall surface of the reactor is wetted by stirring either an alkoxysilane or water.

11. The method for producing a synthetic quartz glass powder according to Claim 10, wherein the stirring is carried out after charging water, and an alkoxysilane is then charged thereafter.

12. The method for producing a synthetic quartz glass powder according to Claim 11, wherein the stirring is carried out after charging water, and an alkoxysilane is then charged after withdrawing a part or the whole part of the water from the reactor.

13. The method for producing synthetic quartz glass powder by calcining a silica gel powder obtained by hydrolysis of an alkoxysilane according to any one of Claims 1 to 12, characterized by initiating stirring of a content in a reactor after charging either an alkoxysilane or water into the reactor and then finishing the charging of at least 90 wt% of the other within 15 minutes.

14. The method for producing a synthetic quartz glass powder by calcining a silica gel powder obtained by hydrolysis of an alkoxysilane according to any one of Claims 1 to 13, characterized by withdrawing a gel while keeping a liquid content of at least 50% after reaching a temperature of sol or wet gel of at least 60°C in hydrolysis-gelling step.

15. The method for producing a synthetic quartz glass powder by calcining a silica gel powder obtained by hydrolysis of an alkoxysilane according to any one of Claims 1 to 14, characterized by fixing a time of at least from finishing the charging of an alkoxysilane and water to gelling at least 10 minutes in hydrolysis step.

16. The method for producing a synthetic quartz glass powder by calcining a silica gel powder obtained by hydrolysis of an alkoxysilane according to any one of Claims 1 to 15, characterized by keeping a liquid temperature of a starting material charged in a reactor at a temperature of not higher than 50°C at least until finishing the charging of an alkoxysilane and water in the charging of the starting material in hydrolysis step.

17. The method for producing a synthetic quartz glass powder according to any one of Claims 1 to 16, wherein a tetraalkoxysilane is used as the alkoxysilane.

18. The method for producing a synthetic quartz glass powder according to any one of Claims 1 to 17, wherein tetramethoxysilane is used as the tetraalkoxysilane.

19. The method for producing a synthetic quartz glass powder according to any one of Claims 1 to 18, wherein the physical stirring means is a ribbon type stirring blade.

20. The method for producing a synthetic quartz glass powder according to any one of Claims 1 to 19, wherein the reactor has an internal volume of at least 150 liters.

21. A method for producing a quartz glass shaped product, characterized by melt-forming a synthetic quartz glass powder obtained by the method according to any one of Claims 1 to 20.
